(19) **Europäisches Patentamt**

**European Patent Office**

**Office européen des brevets**

(11) **EP 1 034 832 A2**

(12) **EUROPEAN PATENT APPLICATION**

(43) Date of publication:
**13.09.2000 Bulletin 2000/37**

(51) Int. Cl.7: **B01D 53/94**, B01J 37/025, B01J 23/62, B01J 23/89, B01J 21/06

(21) Application number: **00104429.6**

(22) Date of filing: **03.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.03.1999 KR 9907254**

(71) Applicant:
**SAMSUNG ELECTRO-MECHANICS Co. Ltd.
Suwon, Kyunggi-do (KR)**

(72) Inventors:
• **Lim, Chang-bin**
  **Seocho-gu, Seoul (KR)**
• **Pak, Chan-hoin**
  **Nowon-gu, Seoul (KR)**
• **Cho, Ju-hee**
  **Cheonan-city, Chungcheongnam-do (KR)**

(74) Representative:
**Wilhelm & Dauster
Patentanwälte
European Patent Attorneys
Hospitalstrasse 8
70174 Stuttgart (DE)**

(54) **Catalyst for purification of an exhaust gas from diesel engines**

(57) A catalyst for purification of an exhaust gas, e.g. from diesel engines, with an improved purification efficiency for both nitrogen oxide and particulates in exhaust emissions is provided. A high-temperature active catalyst includes: a first catalytic layer for reducing nitrogen oxide, the first catalytic layer including a carrier part formed of iron (Fe)-doped modified zirconium dioxide, and a catalyst part formed of copper (Cu) or copper oxide; and a second catalytic layer for removing particulates, the second catalytic layer including a carrier part formed of Cu-doped modified zirconium dioxide, a main catalyst part formed of platinum (Pt) and tin (Sn), and a co-catalyst part formed of copper oxide. A low-temperature active catalyst includes: a first catalytic layer for reducing nitrogen oxide, the first catalytic layer including a carrier part formed of iron (Fe)-doped modified zirconium dioxide, and a catalytic part formed of palladium (Pd); and a second catalytic layer for removing particulates, the second catalytic layer including a carrier part formed of copper (Cu)-doped zirconium dioxide, a main catalyst part formed of platinum (Pt) and tin (Sn), and a co-catalyst part formed of copper oxide.

**EP 1 034 832 A2**

**Description**

BACKGROUND OF THE INVENTION

1. Field of the Invention

The present invention relates to a catalyst for purification of an exhaust gas, e.g. of an exhaust gas emitted from a diesel engine of a vehicle.

2. Description of the Related Art

There is increasing world-wide interest in environmental preservation along with environmental concerns. In particular, air pollution rather than water and soil pollution is mostly caused by combusters and is seriously affected by the structure of the exhaust system of the combuster, the operating principle thereof, and weather conditions. A typical combuster which causes the air pollution is vehicles.

The seriousness in air pollution by vehicles lies in that vehicles emit pollutants wherever they go, and the use of vehicles sharply increases with improvement in living conditions. For this reason, restrictions have been imposed on the exhaust emissions from vehicles, and as a result of efforts made, almost complete purification for carbon hydroxide, carbon monoxide and nitrogen oxide in the exhaust emissions from gasoline engines has been achieved using a three way catalyst and a lean burn catalyst.

However, the problems with diesel engines are different to those of gasoline engines. Recently, the use of diesel engines has greatly increased due to the high combustion efficiency of diesel and its low cost compared to gasoline. Due to the combustion principle of diesel engines which burn diesel under high-pressure and in an oxygen-rich atmosphere, diesel engines emit solid and liquid composite pollutants such as soot particles (particulates), nitrogen oxides, soluble organic substances, sulfides, etc. In particular, particulates containing a carcinogenic substance such as a multinucleate aromatic substance are considered to be the most harmful exhaust emissions, and are emitted in the form of an undesirable visible smog. For this reason, research into an exhaust gas purification system for diesel engines has been focused on a catalyst for removing such particulates.

On the other hand, nitrogen oxides, another major component of the exhaust emissions from diesel engines, are considered to be the main cause of air pollution, which causes acid rain, and the formation of ozone and smog by a reaction with hydrocarbons. Nitrogen oxides are eliminated by reduction. However, the presence of excessive oxygen relative to the oxygen equivalent required for oxidizing combustible carbonic compounds, such as unburnt hydrocarbons or carbon monoxide, hinders the reduction of nitrogen oxides for elimination. Also, it is difficult to purify nitrogen oxides under a sulfur oxide ($SO_x$) atmosphere, and particularly, under a sulfur dioxide ($SO_2$) atmosphere.

Therefore, there is a need for a catalyst for purification of exhaust gas from diesel engines, which is effective for both the particulates and the nitrogen oxides.

Existing exhaust gas purification techniques for diesel engines are classified into two classes; one for burning particulates using a trap, and the other for burning soluble organic substances with a flow-through type catalyst produced by coating an open-cell honeycombed carrier with a catalyst. In particular, the former is for exclusively removing carbon from the particulates, so that it cannot be used for removing the nitrogen oxides. Also, the latter is for oxidizing the soluble organic substances, in addition to the particulates, hydrocarbons and carbon monoxide to eliminate the same by using a metal catalyst in an oxide carrier as done with a catalyst for gasoline engines. In addition, it is known that the use of the flow-through type catalyst can reduce nitrogen oxides to some extent.

However, since the existing flow-through type catalyst mainly burns the soluble organic substances, the reduction activity of the catalyst with respect to nitrogen oxides is merely at 20-30 percent of its oxidation activity with respect to particulates. This is regarded to be because sulfur in diesel produces excessive sulfur dioxide, oxygen and water in the exhaust emissions, which results in reduced activity and durability of the catalyst.

Catalysts for purification of exhaust gas from vehicles are comprised of a carrier and a main catalyst. Typical examples of the carrier, which has its inherent activity and is a decisive factor in determining the characteristics of the purification catalyst, include alumina, titanium dioxide, zirconium dioxide, silicon dioxide and the like. However, alumina for diesel engines adsorbs sulfur dioxide at low temperatures and emits sulfur trioxide at high temperatures via oxidation, which increases particulates in the exhaust emissions and reduces the activity and durability of the catalyst.

Meanwhile, titanium dioxide and zirconium dioxide, which are used alone or in a mixture, adsorb a small amount of sulfur dioxide and produces a small amount of sulfate, but exhibit a sharp reduction in their specific surface area at high temperatures, so that they cannot sufficiently exert their functions as a carrier. In addition, titanium dioxide and zirconium dioxide lower the activity of a precious metal and a transition metal, and in turn deteriorate the catalyst. Silicon dioxide has a strong resistance against the toxicity of both sulfur dioxide and water, but due to its low activity, a large amount of catalyst needs to be impregnated therein.

As catalysts for the purification of exhaust gas from vehicles, the use of precious metals is widely known. Platinum (Pt) and palladium (Pd), which are typical precious metals used as a three way catalyst for gasoline engines, have been verified as effective catalysts, due to their considerably high purification activity with respect to nitrogen oxides in addition to hydrocarbons and carbon monoxide. Accordingly, Pt and Pd have also been used widely for purification of the exhaust gas from diesel engines.

However, Pt has an advantage of good purification activity for nitrogen oxide in diesel engines operating under an oxygen-rich atmosphere, but has a disadvantage in that it facilitates oxidation of sulfur dioxide at a temperature of 300°C or more and in turn serves as crystal nuclei for particulates, increasing the amount of particulates in the exhaust. To account for this problem, addition of vanadium oxides for suppression of the oxidizing power of sulfur dioxide has been suggested. However, vanadium oxides reduce the oxidation activity for pollutants including particulates, hydrocarbons and carbon monoxide along with the oxidizing power of sulfur dioxide, thereby lowering the durability of the catalyst.

Also, Pd has an advantage in that it facilitates the oxidation activity for sulfur dioxide at fairly high temperatures, for example, at at least 450°C, but has a low oxidation activity for pollutants at low temperatures and a reduced durability at low temperatures.

In terms of cost and limited reserves of precious metals, there is a need for new substitutes for precious metals. However, since a main catalyst component capable of satisfactorily substituting for a precious metal has not yet been found, the amount of the precious metal used has been reduced with the aid of co-catalysts such as transition metals, rare earth metals and oxides of these metals. However, these co-catalysts have a low initial activity, and are affected by sulfur dioxide and water, which results in reduced durability.

## SUMMARY OF THE INVENTION

To solve the above problems, it is the technical problem underlying the present invention to provide a catalyst for purification of an exhaust gas, e.g. from diesel engines, with the capability of improving oxidation efficiency of soot particles (particulates) and capable of preventing additional production of the particulates by suppressing oxidation of sulfur dioxide.

This problem is solved by providing a catalyst having the features of claim 1, 3, or 13.

According to claim 1, there is provided a high-temperature active catalyst for purification of exhaust gas from diesel engines, comprising: a first catalytic layer for reducing nitrogen oxide, the first catalytic layer including a carrier part formed of iron (Fe)-doped modified zirconium dioxide, and a catalyst part formed of copper (Cu) or copper oxide; and a second catalytic layer for removing particulates, the second catalytic layer including a carrier part formed of Cu-doped modified zirconium dioxide, a main catalyst part formed of platinum (Pt) and tin (Sn), and a co-catalyst part formed of copper oxide.

Preferably, the amount of Cu or copper oxide in the first catalytic layer is in the range of 0.5 to 5 wt% based on the weight of the carrier part formed of Fe-doped modified zirconium dioxide.

According to claim 3, there is provided a low-temperature active catalyst for purification of exhaust gas from diesel engines, comprising: a first catalytic layer for reducing nitrogen oxide, the first catalytic layer including a carrier part formed of iron (Fe)-doped modified zirconium dioxide, and a catalytic part formed of palladium (Pd); and a second catalytic layer for removing particulates, the second catalytic layer including a carrier part formed of copper (Cu)-doped zirconium dioxide, a main catalyst part formed of platinum (Pt) and tin (Sn), and a co-catalyst part formed of copper oxide.

Preferably, the amount of Pd in the first catalytic layer is in the range of 0.2 to 0.8 wt% based on the weight of the carrier part formed of Fe-doped modified zirconium dioxide. Preferably, for the high-temperature active catalyst and the low-temperature active catalyst, the Fe-doped modified zirconium dioxide or the Cu-doped modified zirconium dioxide comprises $SO_4^{2-}$ of 1 to 5wt% based on the weight of the modified zirconium dioxide, and has a specific surface area of 80 to 130 $m^2$/gram. Preferably, for the high-temperature active catalyst and the low-temperature active catalyst, the amount of Fe in the carrier part of the first catalytic layer is in the range of 3 to 6 wt% based on the weight of the modified zirconium dioxide.

Preferably, for the high-temperature active catalyst and the low-temperature active catalyst, the amount of Cu in the carrier part of the second catalytic layer is in the range of 3 to 6 wt% based on the weight of the modified zirconium dioxide. Preferably, for the high-temperature active catalyst and the low-temperature active catalyst, the amount of each of Pt and Sn of the second catalytic layer is in the range of 0.05 to 0.3 wt% based on the weight of the carrier part formed of Cu-doped modified zirconium dioxide. Preferably, for the high-temperature active catalyst and the low-temperature active catalyst, the copper oxide in the co-catalyst part of the second catalytic layer has a particle size of 0.1 to 10 μm, and the amount of the copper dioxide is in the range of 10 to 30 wt% based on the weight of the main catalyst part of the second catalytic layer.

Preferably, the first catalytic layer is coated on a heat-resistance three-dimensional structure along with alumina spheres with a size of 50 to 100 μm, and the second catalytic layer is coated on the first catalytic layer. Preferably, the amount of alumina spheres is in the range of 5 to 30 wt% based on the weight of the carrier part formed of Fe-doped modified zirconium dioxide. Preferably, the heat-resistance three-dimensional structure is one selected from the group consisting of an open-flow ceramic honeycombed structure, a wall-flow ceramic honeycomb monolithic structure and an open-flow metal honeycombed structure.

In addition, the present invention provides a catalyst for purification of exhaust gas from diesel engines, prepared by linking the high-temperature active catalyst and the low-temperature active catalyst in series, such that the high-temperature active catalyst is located at an exhaust gas inlet portion and the low-temperature active catalyst is located at an exhaust gas outlet portion.

BRIEF DESCRIPTION OF THE DRAWINGS

The above object and advantages of the present invention will become more apparent by describing in detail preferred embodiments thereof with reference to the attached drawings in which:

FIG. 1 is a schematic view of a flow-through type catalyst prepared in Example 8;
FIGS. 2A and 2B are graphs illustrating the combustion temperature of particulates and the degree of $SO_2$ oxidation, respectively, for the catalysts of Example 4 and Comparative Examples 3 and 4;
FIGS. 3A and 3B are graphs illustrating the degree of nitrogen oxide reduction and the degree of $SO_2$ oxidation, respectively, for the catalysts of Examples 2 and 3 and Comparative Examples 1 and 2;
FIGS. 4A and 4B are graphs illustrating the combustion temperature of particulates and the degree of $SO_2$ oxidation, respectively, for the catalysts of Example 5 and Comparative Examples 5 and 6;
FIGS. 5A and 5B are graphs illustrating the degree of nitrogen oxide reduction and the degree of $SO_2$ oxidation, respectively, for the catalysts of Examples 6 and 7 and Comparative Examples 5 and 6;
FIGS. 6A through 6C are graphs illustrating the combustion temperature of particulates, the degree of nitrogen oxide reduction and the degree of $SO_2$ oxidation, respectively, for the catalysts of Example 8 and Comparative Examples 5 and 6; and
FIG. 7 is a graph illustrating the smog removal efficiency of the catalysts of Example 8 and Comparative Examples 5 and 6 during a sudden speed rise of a diesel engine carrying the catalyst.

DETAILED DESCRIPTION OF THE INVENTION

Zirconium dioxide powder initially has a low solid acidity, but shows a catalytic activity by addition of a metal oxide. However, as described previously, zirconium dioxide reduces the activity of a precious metal and a transition metal which are impregnated into the carrier as a main catalyst. In addition, the catalytic activity of zirconium dioxide disappears at a temperature of 600°C due to a reduction in the specific surface area at the same temperature, which results in a reduced durability of the catalyst. Thus, the present invention provides a modified zirconium dioxide with an improved activity at high temperatures, and the specific surface area of which is not reduced at high temperatures, wherein the modified zirconium dioxide is obtained by adding a predetermined amount of $SO_4^{2-}$ into the lattice of zirconium dioxide powder.

The low acidity of the modified zirconia of -5 or more (Hammet acidity function), which is fairly low compared to the activity of solid super acid of -14, enables partial oxidation of hydrocarbons or carbon monoxide with an improved reduction activity for nitrogen oxides and a higher degree of oxidation for particulates including carbon and soluble organic substances.

Also, when the modified zirconium dioxide is doped with iron (Fe) and copper (Cu), which have their own active sites, and thermal treated, phase transition from a monoclinic to a tetragonal shape occurs due to excessive electrons produced in modified zirconium dioxide. As a result, $O^{2-}$ with a strong activity are derived, further improving the oxidation activity.

Iron is a metal which is good at partially oxidizing hydrocarbon. Thus, a carrier prepared by impregnating the modified zirconium dioxide with iron oxide is also good at partially oxidizing hydrocarbons. Also, carbon monoxide produced by the partial oxidation of hydrocarbons increases a reduction activity for nitrogen oxide, but more particularly, increases the reduction activity for nitrogen oxide in a temperature range of 400 to 500°C. In contrast to the excellent reduction activity for nitrogen dioxide, the power of oxidation for sulfur dioxide is relatively low at any temperature. Thus, it is preferable to dope a carrier part of a first catalyst layer with Fe. As for a catalyst part of the first catalyst layer, Cu is used for the activity at high temperatures and palladium (Pd) for the activity at low temperatures.

Cu is a metal having a higher reduction activity for nitrogen oxide. In a carrier prepared by impregnating the modified zirconium dioxide with copper oxide, reduction of nitrogen oxide and consumption of hydrocarbons occur at the same temperature range. Thus, by using both Fe that produces carbon monoxide by oxidizing hydrocarbons, and Cu having a higher power of reduction for nitrogen oxide in a predetermined ratio, the power of reduction for nitrogen oxide can be improved even in an oxidation atmosphere. Thus, it is preferable to impregnate a first catalyst layer of a high-temperature active catalyst, which is located at an exhaust gas inlet portion due to its activity, for example, in a temperature range of 380 to 420°C, with Cu as a main catalyst.

For a first catalyst layer of a low-temperature active catalyst, which is located at an exhaust gas outlet portion due to its activity, for example, in a temperature range of 250 to 320°C, Pd which has good activity at low temperatures and oxidation inhibition capability for sulfur dioxide is preferred as a main catalyst for a higher purification efficiency for nitrogen oxide at a specific temperature.

A second catalyst layer includes a carrier part formed of modified zirconium dioxide doped with Cu, a main catalyst part formed of a mixture of Pt and tin (Sn), and a co-catalyst part formed of copper oxide.

In particular, by combining the carrier of modified zirconium dioxide doped with Cu, a main catalyst including Pt having a good oxidation activity at high temperatures and Sn having a good activity in the presence of moisture with oxidation inhibition capability for sulfur dioxide, and a copper oxide (CuO) as a co-catalyst, the toxicity of the exhaust can be suppressed and a large amount of oxygen ions is produced, resulting in an improved oxidation activity for particulates. In particular, the presence of CuO with a large particle size (ranging from 0.1 to 10 μm) in the main catalyst prevents aggregation of Pt particles having activity at low temperatures, which results in an improved durability at high temperatures.

Thus, by coating the first catalyst layer for purification of nitrogen oxide, which has the foregoing feature, on a heat-resistance honeycombed 3-dimensional structure, and in turn the second catalyst layer for purification of particulates thereon, and by activating both the catalyst for nitrogen oxide purification (having activity at a temperature of 300 to 400°C) and the catalyst for particulate purification (having activity at a temperature of 400°C or less) in a predetermined temperature range, oxidation of hydrocarbons and reduction of nitrogen oxide occurs, which generates heat, and particulates are burnt, which results in a localized reduction atmosphere with a synergistic effect in that the reduction efficiency of nitrogen oxide is improved and the combustion temperature of particulates is lowered.

When coating the catalyst for nitrogen oxide purification and the catalyst for particulate purification on a heat-resistance honeycombed 3-dimensional structure, alumina spheres may be coated thereon at the same time, which allows the gaseous and particle substances of the exhaust gas in catalyst layers to be temporarily held. As a result, the purification ratio for nitrogen oxide and the combustion capability for particulates are further improved. Preferably, the amount of alumina spheres is in the range of 5-30 wt% based on the weight of the carrier formed of a modified zirconium dioxide doped with Fe. If the amount of alumina spheres added exceeds this range, the catalytic activity may be lowered.

Also, two catalysts for purification of nitrogen oxide, each having a first catalytic layer capable of reducing nitrogen oxide at different temperature ranges, are linked in series, the one having high-temperature catalytic activity being at an exhaust gas inlet portion and the one having low temperature catalytic activity being at an exhaust gas outlet portion, whereby the activity temperature range for nitrogen oxide reduction is extended, which results in an improved activity for nitrogen oxide reduction.

The present invention will be described in greater detail by means of the following examples and comparative examples. The following examples are for illustrative purposes and not intended to limit the scope of the invention.

Example 1 : Catalyst for removal of particulates

11.41 g of $Cu(NO_3)_2.3H_2O$ was dissolved in 100 ml of deionized water, mixed with a modified zirconium dioxide containing 4 wt% $SO_4^{2-}$ (specific surface area: 80-130m²/g) and then dried. The dried product was calcined at 500°C for 3 hours to provide carrier powder doped with 3wt% Cu (hereinafter, referred to as Cu-Z4).

Following this, 0.18 g of $[Pt(NH_3)]_4Cl_2$ and 0.19 g of $SnCl_3.3H_2O$ were dissolved in 40 ml of ethyleneglycol solution (100%), mixed with the obtained Cu-Z4 carrier powder and dried. The resultant product was calcined at 500°C for 3 hours to add Pt and Sn each of 0.1 wt%, as main catalysts, to the Cu-Z4 carrier powder.

Also, CuO powder having a particle size of 0.1 to 10 μm was added in an amount of 30% by weight of the main catalyst added to the Cu-Z4 carrier powder, to afford a catalyst *0.1Pt-0.1Sn/Cu-Z4/30CuO* for use in removing particulates in exhaust emissions.

Example 2 : High-temperature active catalyst for purification of nitrogen oxide

A modified zirconium oxide with 4 wt% $SO_4^{2-}$ (specific surface area of 80-130 m²/g) was mixed with a $Fe(NO_3)_2$ solution, dried and calcined at 500°C for 3 hours to afford carrier powder doped with 3 wt% $Fe_2O_3$ (hereinafter, referred to as Fe-Z4).

Following this, 11.41 g of $Cu(NO_3)_2.3H_2O$ was dissolved in 100 ml of deionized water. The resulting solution was added dropwise to 100 g of Fe-Z4 powder, stirred and dried. The dried product was calcined at 500°C for 3 hours to afford a catalyst *3Cu/Fe-Z4* which has activity at high temperatures for nitrogen oxide.

Example 3: Low-temperature active catalyst for purification of nitrogen oxide

The process of Example 2 was followed except that 0.6 wt% Pd was used instead of 3wt% Cu, to afford a catalyst *0.6Pd/Fe-Z4* which has activity at low temperatures for nitrogen oxide.

Example 4

2.0 g of the catalyst powder obtained in Example 1 and 0.1 g of particulates from exhaust emissions were compressed by a force of 0.5 kgf/cm² to form pellets. The pellets were milled and sieved to obtain particles having a size of 1-2 mm. A removal ratio of particles was measured.

Example 5

200 g of the catalyst powder obtained in Example 1 was mixed with 500 ml of deionized water to obtain a catalyst slurry. The slurry was coated on a honeycomb structure having 400 cells per square inch of cross-section. The honeycomb coated with the slurry was dried and then calcined at 500°C for 2 hours), resulting in a catalytic layer for removing particulates on the honeycomb structure.

Example 6

A catalytic layer for purification of nitrogen oxide at high temperatures was prepared as in Example 5, except that 200 g of the catalyst powder obtained in Example 2 was mixed with 500 ml of deionized water to obtain a catalyst slurry, and alumina spheres having a particle size of 50 to 100 μm were added in an amount of 10 wt% based on the weight of the carrier powder.

Example 7

A catalytic layer for purification of nitrogen oxide at low temperatures was prepared as in Example 6, except that the catalyst powder obtained in Example 3 was used instead of the catalyst powder from Example 2.

Example 8

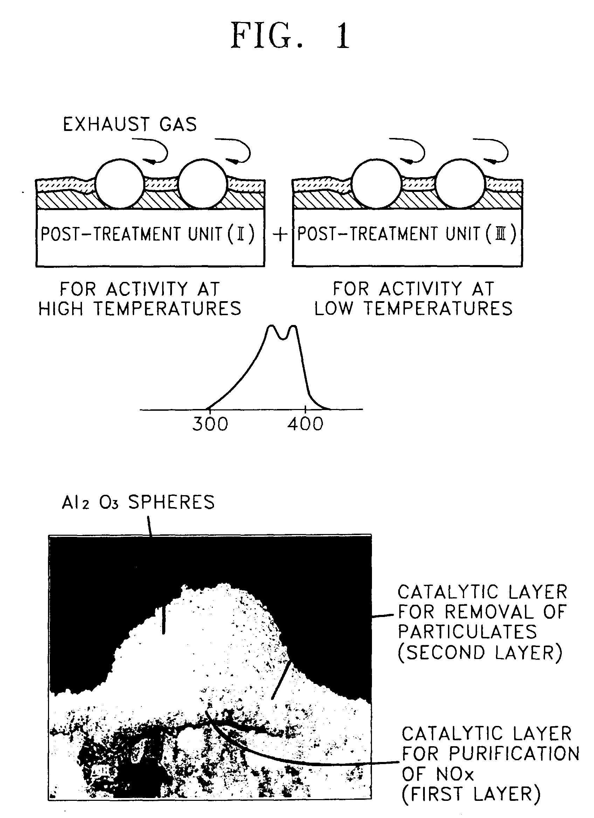

As illustrated in FIG. 1, a high-temperature active catalyst for use in an exhaust gas inlet portion of diesel engines and a low-temperature active catalyst for use in an exhaust gas outlet portion of diesel engines were prepared. For the high-temperature active catalyst, the catalytic layer formed in Example 6 was coated with the catalyst slurry for removing particulates prepared in Example 5 by a dipping method. For the low-temperature active catalyst, the catalytic layer formed in Example 7 was also dipped in the catalyst slurry for removing particulates prepared in Example 5.

Following this, the high-temperature active catalyst and the low-temperature active catalyst were linked in series to form a flow-through type catalyst expressed as *(0.1Pt-0.1Sn/Cu-Z4)/(3Cu/Fe-Z4)+(0.1Pt-0.1Sn/Cu-Z4)/(0.6Pd/Fe-Z4)*.

For comparison, catalysts having about twice the particulate removal efficiency (approximately 40%) relative to a general post-treatment catalyst, were selected from the catalysts prepared in the above examples. For the selection, each catalyst was loaded into a supercharged direct injection type I-6-cylinder diesel engine (displacement 11,100cc) and diesel containing 0.25wt% sulfur was supplied. Then, a predetermined particulate removal performance test was carried out.

Comparative Example 1

A solution of $Cr(NO_3)_3.9H_2O$ was dissolved in deionized water of 200 wt% based on the weight of $TiO_2$ powder, mixed with $TiO_2$ powder having a specific surface area of 250 to 350 $m^2/g$, and stirred to impregnate the $TiO_2$ powder with Cr to a loading of 3 wt%. The resulting slurry was dried and calcined at 500°C for 5 hours to obtain Cr-doped carrier powder. For a main catalyst part, $Fe(NO_3)_2$ and $Pt(NH_3)_4Cl_2.H_2O$ were dissolved in an ethyleneglycol solution of 40 wt% based on the weight of the initial $TiO_2$ to impregnate the Cr-doped $TiO_2$ carrier powder with Fe and Pt, respectively, to a loading of 3 wt% and 0.5 wt%, respectively. After the Fe and Pt impregnation, the same drying and calcination procedure was repeated. NiO powder having a particle size of 0.1 to 10 μm was added in an amount of 30 wt% based on the weight of the Cr-doped $TiO_2$ carrier powder to afford a composite catalyst expressed as *3Fe-0.5Pt/Cr-TiO_2+30NiO*.

Comparative Example 2

The process of Comparative Example 1 was followed except that $Pd(NO_3)$, $Pr(NO_3)_2.6H_2O$, $Ce(NO_3)_2.6H_2O$, $Cu(NO_3)_2.3H_2O$ and $NH_4VO_3$ were separately dissolved in a 40wt% ethylene glycol solution, and added to $TiO_2$ powder having a specific gravity of 250 to 350 $m^2/g$ to impregnate the $TiO_2$ powder separately with Pd, Pr, Ce, Cu and V to a loading of 2 wt%, 5 wt%, 5wt%, 10 wt% and 15 wt%, respectively.

Comparative Examples 3 and 4

Catalyst pellets with particulates were prepared following the process of Example 4, except that the catalyst powders from Comparative Examples 1 and 2 were used respectively.

Comparative Examples 5 and 6

The process of Example 5 was followed except that the catalyst powders from Comparative Examples 1 and 2 were used respectively.

(1) Catalytic Activity Testing

The combustion activity for particulates and the purification activity for nitrogen oxide were measured in the following conditions:

- Gas Composition: 500 ppm $NO_x$; 800 ppm HC; 2000 ppm CO; 200 ppm $SO_2$; 10% $H_2O$; 10% $O_2$; He balance
- Reaction Temperature: 200 to 600°C
- Space Velocity: 40,000/h

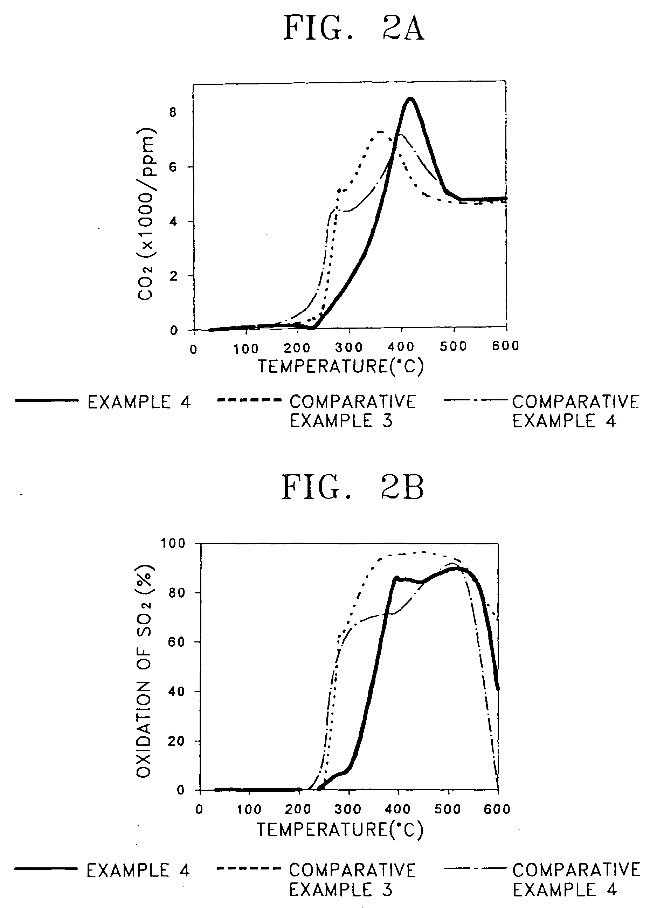

Analysis of the effluent was carried out to determine the amount of $CO_2$ produced, the degree of $SO_2$ oxidation, and the degree of $NO_x$ reduction. A non-dispersive infra-red analyzer was used for the measurement of the amount of $CO_2$ and the degree of $SO_2$ oxidation, and a chemiluminescent detector analyzer for the degree of $NO_x$ reduction. The results of this analysis are presented in FIGS. 2A through 7B.

FIGS. 2A and 2B illustrate the analysis results for Example 4 and Comparative Examples 3 and 4. Referring to FIG. 2A, the combustion temperature of particulates for the catalyst of Example 4 is similar to that of Comparative Example 3 at about 425°C. However, FIG. 2A also clearly shows that the catalyst of Example 4 has a vigorous reactivity to produce $CO_2$ from particulates while the catalysts of Comparative Examples 3 and 4 has a temporal resting stage near 270°C in the combustion of particulates. Referring to FIG. 2B, the catalyst of Example 3 exhibits a good $SO_2$ oxidation inhibition effect at low temperatures compared to the catalysts of Comparative Examples 3 and 4.

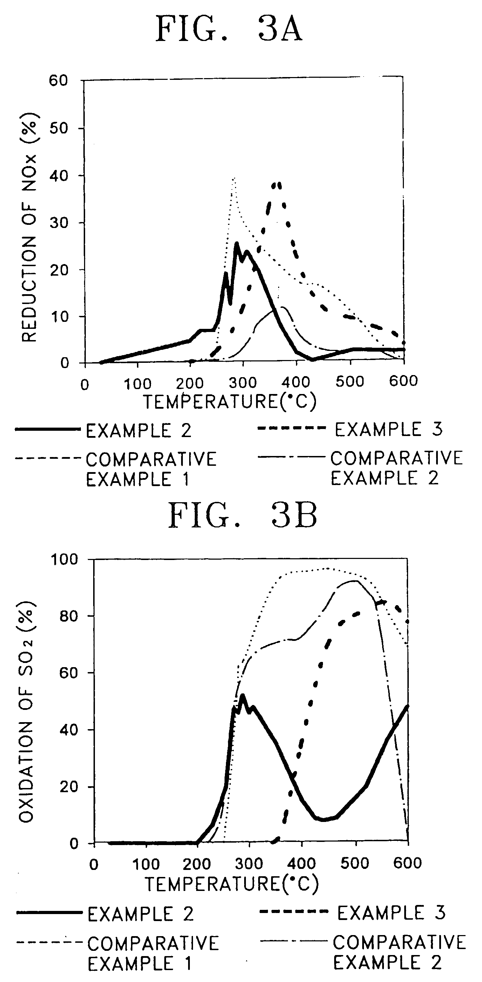

FIGS. 3A and 3B illustrate the analysis results for Examples 2 and 3 and Comparative Examples 1 and 2. As shown in FIG. 3A, the degree of nitrogen oxide reduction by the catalysts of Examples 2 and 3 is about 25 to 40 %, which is lower than that by the catalyst of Comparative Example 1. However, the catalyst of Example 3 shows the highest degree of nitrogen oxide reduction at 370°C which is close to the average temperature of exhaust gas during traveling of diesel engines. In addition, although the catalyst of Example 2 shows the highest reduction of nitrogen oxide at a lower temperature of 290°C than for Example 3, its effects on $SO_2$ oxidation is advantageous with a lower degree of $SO_2$ oxidation.

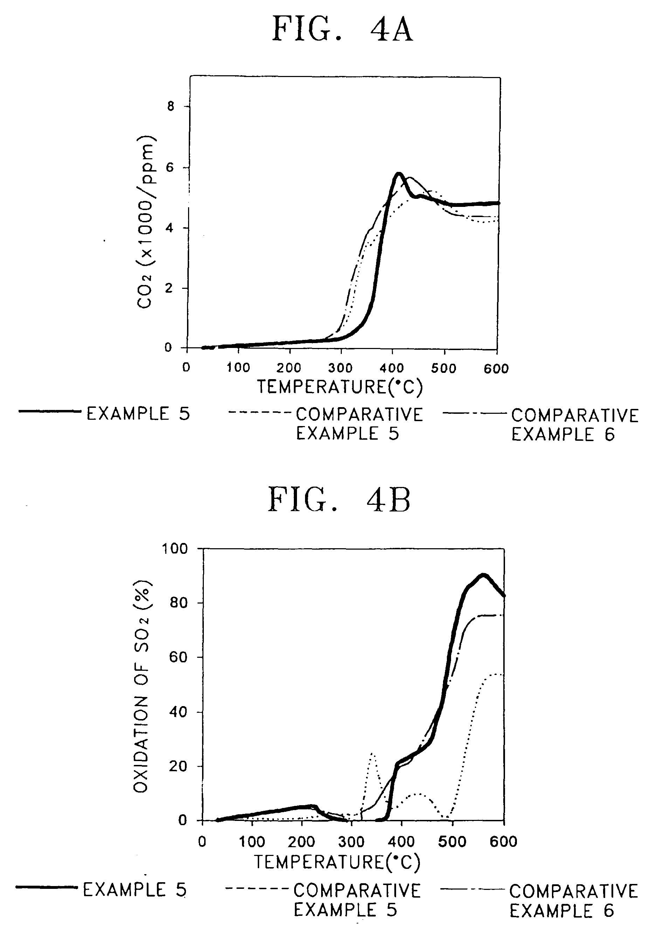

FIGS. 4A and 4B illustrate the analysis results for Example 4 and Comparative Examples 5 and 6. As shown in FIG. 4A, the combustion temperature of particulates is lower at about 405°C for the catalyst of Example 5 compared to that of Comparative Examples 5 and 6, and the steep curve for Example 5 assures a good reactivity during the burning of particulates. Also, the degree of $SO_2$ oxidation for Example 5 is as low as about 20% at a temperature of 400°C or less.

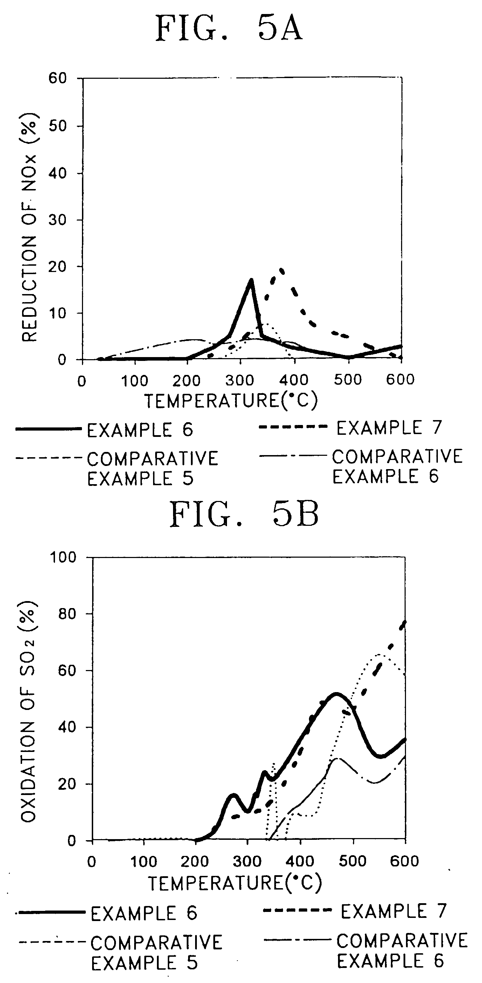

FIGS. 5A and 5B illustrate the analysis results for Examples 6 and 7 and Comparative Examples 5 and 6. As shown in FIG. 5A, the degree of nitrogen oxide reduction is 19% at 370°C for the catalyst of Example 7 and 17% at 320°C for the catalyst of Example 6, which is two or three times the reduction of nitrogen oxide for the catalysts of Comparative Examples 5 and 6. Also, as shown in FIG. 5B, the degree of $SO_2$ oxidation for these catalysts is slightly higher than that for Comparative Examples 5 and 6, but this $SO_2$ oxidation can be improved by coating additional catalytic layer for particulate reduction on the carrier.

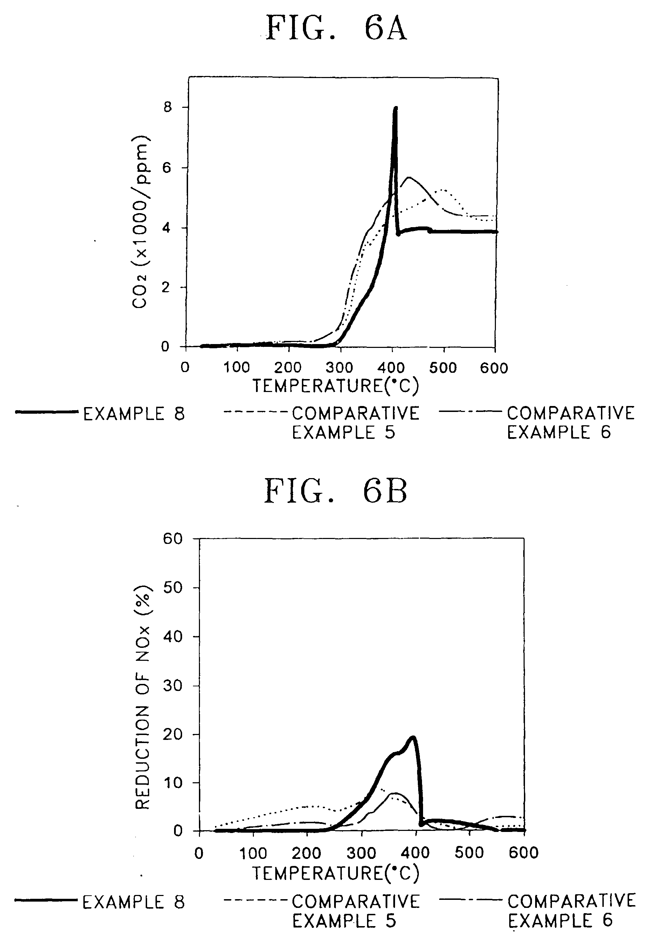

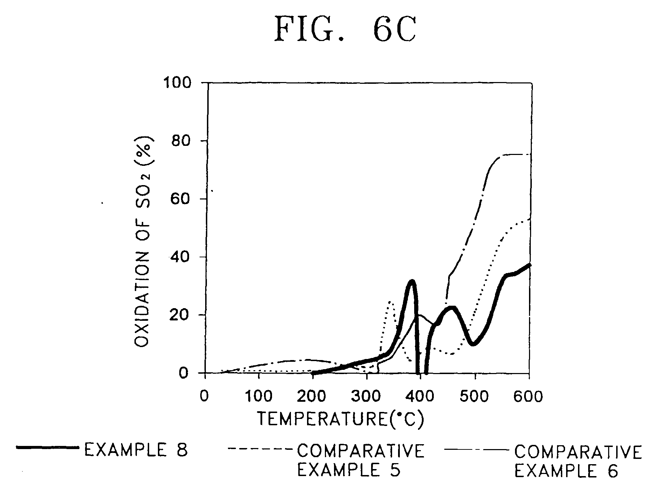

FIGS. 6A through 6C illustrate the analysis results for Example 8 and Comparative Examples 5 and 6. The combustion temperature of particulates is 400°C for the catalyst of Example 8, which is lower compared to the catalysts of Comparative Examples 5 and 6 as shown in FIG. 6A. As shown in FIG. 6B, the catalyst of Example 8 shows a high nitrogen oxide reduction of 18% in a wide temperature range from 300 to 400°C. Also, the degree of $SO_2$ oxidation is very low for the catalyst of Example 8 as shown in FIG. 6C.

(2) Smog Removal Performance Test

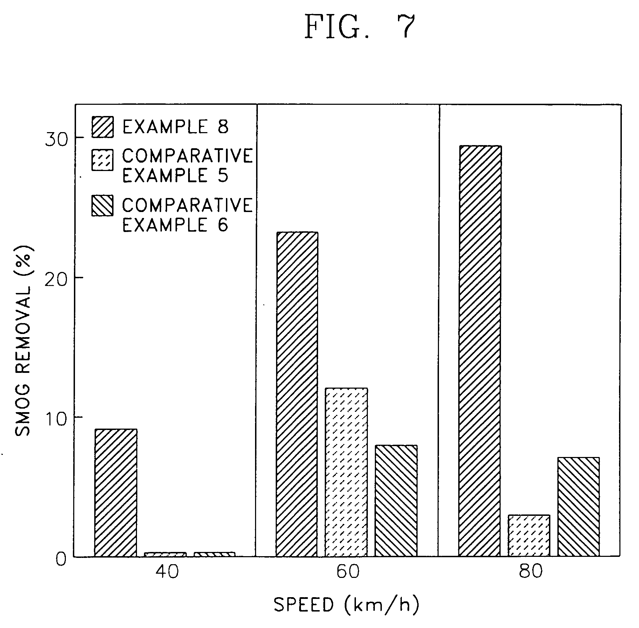

The smog removal performance during a sudden speed rise was measured for the catalysts of Example 8 and Comparative Examples 5 and 6. For the test, the catalysts were loaded separately to a vehicle carrying a supercharged direct injection type 4-cylinder diesel engine (displacement 2600cc) and each vehicle was driven at a speed of 40, 60 and 80 km/h. A predetermined portion of exhaust gas through an exhaust pipe was sucked with a pump and filtered off with a filter paper. Then, the concentration of smog was read by converting light reflection by the contaminated filter paper to a current. The result is presented in FIG. 7. As shown in FIG. 7, the catalyst of Example 8 shows a fairly higher smog removal efficiency for the entire speed range compared to the catalysts of Comparative Examples 1 and 2. In particular, it should be noted that the smog removal efficiency by the catalyst of Example 8 is about 10% even at a speed of 40 km/h at which particulates are barely removed.

As described above, in the catalysts for purification of exhaust gas from a diesel engine, the use of Pt and Pd, which are precious metals, is restricted to be lower than 0.3 wt% and 0.8 wt%, respectively, based on the weight of carrier. However, irrespective of the reduced amount of precious metal, the combustion temperature of particulates is decreased to 400°C or less, which is considerably low relative to that of 500°C or more by a common catalyst, under a simulated exhaust gas atmosphere containing 10% or more moisture and 200 ppm $SO_2$. Also, the particulate burning efficiency by the catalysts of the present invention is better than that by the catalysts of the comparative examples which are considered to have a good particulate burning efficiency. As for the purification of nitrogen dioxide, the catalysts of the present invention exhibit a purification efficiency of 18% or more in a temperature range of 300 to 400°C, which is 8% higher than the purification efficiency of a common catalyst for nitrogen dioxide. In addition to the good nitrogen dioxide purification performance, the catalysts of the present invention contribute to reducing the oxidation of $SO_2$, so that there is no concern about secondary production of particulates. Furthermore, the catalysts of the present invention show a higher smog removal efficiency of 20% or more on average during a sudden speed rise from 40 to 100 km/h.

**Claims**

1. A high-temperature active catalyst for purification of an exhaust gas, e.g. from diesel engines, characterized by:

   - a first catalytic layer for reducing nitrogen oxide, the first catalytic layer including a carrier part formed of iron (Fe)-doped modified zirconium dioxide, and a catalyst part formed of copper (Cu) or copper oxide; and
   - a second catalytic layer for removing particulates, the second catalytic layer including a carrier part formed of Cu-doped modified zirconium dioxide, a main catalyst part formed of platinum (Pt) and tin (Sn), and a co-catalyst part formed of copper oxide.

2. The catalyst of claim 1, wherein the amount of Cu or copper oxide in the first catalytic layer is in the range of 0.5 to 5 wt% based on the weight of the carrier part formed of Fe-doped modified zirconium dioxide.

3. A low-temperature active catalyst for purification of an exhaust gas, e.g. from diesel engines, characterized by:

   - a first catalytic layer for reducing nitrogen oxide, the first catalytic layer including a carrier part formed of iron (Fe)-doped modified zirconium dioxide, and a catalytic part formed of palladium (Pd); and
   - a second catalytic layer for removing particulates, the second catalytic layer including a carrier part formed of copper (Cu)-doped zirconium dioxide, a main catalyst part formed of platinum (Pt) and tin (Sn), and a co-catalyst part formed of copper oxide.

4. The catalyst of claim 3, wherein the amount of Pd in the first catalytic layer is in the range of 0.2 to 0.8 wt% based on the weight of the carrier part formed of Fe-doped modified zirconium dioxide.

5. The catalyst of any one of claims 1 to 4, wherein the Fe-doped or Cu-doped modified zirconium dioxide comprises $SO_4^{2-}$ of 1wt% to 5wt% based on the weight of the modified zirconium dioxide, and has a specific surface area of 80 $m^2$/gram to 130 $m^2$/gram.

6. The high-temperature active catalyst of any one of claim 1 to 5, wherein the amount of Fe in the carrier part of the first catalytic layer is in the range of 3 wt% to 6 wt% based on the weight of the modified zirconium dioxide.

7. The high-temperature active catalyst of any one of claims 1 to 6, wherein the amount of Cu in the carrier part of the second catalytic layer is in the range of 3 wt% to 6 wt% based on the weight of the modified zirconium dioxide.

8. The high-temperature active catalyst of any one of claims 1 to 7, wherein the amount of each of Pt and Sn of the second catalytic layer is in the range of 0.05 wt% to 0.3 wt% based on the weight of the carrier part formed of Cu-doped modified zirconium dioxide.

9. The high-temperature active catalyst of any one of claims 1 to 8, wherein the copper oxide in the co-catalyst part of the second catalytic layer has a particle size of 0.1 μm to 10 μm, and the amount of the copper dioxide is in the range of 10 wt% to 30 wt% based on the weight of the main catalyst part of the second catalytic layer.

10. The high-temperature active catalyst of any one of claims 1 to 9, wherein the first catalytic layer is coated on a heat-resistance three-dimensional structure along with alumina spheres with a size of 50 μm to 100 μm, and the second catalytic layer is coated on the first catalytic layer.

11. The high-temperature active catalyst of claim 10, wherein the amount of alumina spheres is in the range of 5 wt% to 30 wt% based on the weight of the carrier part formed of Fe-doped modified zirconium dioxide.

12. The high-temperature active catalyst of claim 8 or 9, wherein the heat-resistance three-dimensional structure is one selected from the group consisting of an open-flow ceramic honeycombed structure, a wall-flow ceramic honeycomb monolithic structure and an open-flow metal honeycombed structure.

13. A catalyst for purification of exhaust gas, e.g. from diesel engines, prepared by linking the high-temperature active catalyst according to any of claims 1, 2, and 5 to 12, and the low-temperature active catalyst according to any of claims 3, 4, and 5 to 12, in series, such that the high-temperature active catalyst is located at an exhaust gas inlet portion and the low-temperature active catalyst is located at an exhaust gas outlet portion.

# FIG. 1

EXHAUST GAS

| POST-TREATMENT UNIT (II) | + | POST-TREATMENT UNIT (III) |

FOR ACTIVITY AT
HIGH TEMPERATURES

FOR ACTIVITY AT
LOW TEMPERATURES

300          400

$Al_2 O_3$ SPHERES

CATALYTIC LAYER
FOR REMOVAL OF
PARTICULATES
(SECOND LAYER)

CATALYTIC LAYER
FOR PURIFICATION
OF NOx
(FIRST LAYER)

# FIG. 2A

EXAMPLE 4   COMPARATIVE EXAMPLE 3   COMPARATIVE EXAMPLE 4

# FIG. 2B

EXAMPLE 4   COMPARATIVE EXAMPLE 3   COMPARATIVE EXAMPLE 4

# FIG. 3A

EXAMPLE 2          ------ EXAMPLE 3

------ COMPARATIVE          ---·--- COMPARATIVE
EXAMPLE 1                    EXAMPLE 2

# FIG. 3B

EXAMPLE 2          ------ EXAMPLE 3

------ COMPARATIVE          ---·--- COMPARATIVE
EXAMPLE 1                    EXAMPLE 2

# FIG. 4A

# FIG. 4B

# FIG. 5A

EXAMPLE 6     EXAMPLE 7

COMPARATIVE EXAMPLE 5     COMPARATIVE EXAMPLE 6

# FIG. 5B

EXAMPLE 6     EXAMPLE 7

COMPARATIVE EXAMPLE 5     COMPARATIVE EXAMPLE 6

## FIG. 6A

EXAMPLE 8 ----- COMPARATIVE EXAMPLE 5 —·— COMPARATIVE EXAMPLE 6

## FIG. 6B

EXAMPLE 8 ----- COMPARATIVE EXAMPLE 5 —·— COMPARATIVE EXAMPLE 6

# FIG. 6C

# FIG. 7